# EUROPÄISCHE PATENTANMELDUNG

(11) **EP 0 839 702 A2**
(43) Veröffentlichungstag der Anmeldung: **06.05.1998**
(21) Anmeldenummer: 97117641.7
(22) Anmeldetag: 11.10.1997
(51) Int. Cl.: B62D 1/18

(54) **Klemmvorrichtung für eine verstellbare Lenksäule**

(30) Priorität: 30.10.1996 DE 19643798
(71) Anmelder: Lemförder Metallwaren AG, 49448 Lemförde (DE)
(72) Erfinder: Baumann, Janet, 49356 Diepholz (DE)

(57) **Zusammenfassung**

Es wird eine Klemmvorrichtung für eine verstellbare Lenksäule eines Kraftfahrzeuges zur lösbaren Festlegung eines die Lenksäule aufnehmenden Gehäuses (3) an einer mit der Karosserie des Kraftfahrzeuges fest verbundenen Halterung vorgestellt, die mindestens eine Kontaktflächenpaarung (4) aufweist, welche aus mindestens einer am Lenksäulengehäuse (3) angeordneten Kontaktfläche und je einer korrespondierenden Kontaktfläche an der Karosseriehalterung besteht und mit einer Betätigungsvorrichtung (12) zum Aufeinanderpressen der Kontaktpaarungen (4), wobei die Betätigungsvorrichtung (12) einen Umlenkmechanismus (14) und eine Zugmitteleinrichtung (15) aufweist. Die Zugmitteleinrichtung (15) kann ein Bowdenzug (20) oder ein Zuggestänge sein.

## Beschreibung

Die Erfindung betrifft eine Klemmvorrichtung für eine verstellbare Lenksäule eines Kraftfahrzeuges zur lösbaren Festlegung eines die Lenksäule aufnehmenden Gehäuses an einer mit der Karosserie des Kraftfahrzeuges fest verbundenen Halterung mit mindestens einer Kontaktflächenpaarung, die aus mindestens einer am Lenksäulengehäuse angeordneten Kontaktfläche und mindestens einer korrespondierenden Kontaktfläche an der Karosseriehalterung besteht, und mit einer Betätigungseinrichtung zum Aufeinanderpressen der Kontaktflächenpaarungen.

Klemmvorrichtungen der gattungsgemäßen Art werden sowohl in Personenkraftfahrzeugen als auch in Lastkraftfahrzeugen zur zeitweiligen Arretierung von Lenksäulen eingesetzt, die der Fahrer vorher seinen Bedürfnissen entsprechend eingestellt hat. Die Festlegung vom Lenksäulengehäuse an der karosserieseitig festgelegten Halterung erfolgt üblicherweise mittels einer oder mehrerer reib- oder formschlüssiger Kontaktflächenpaarungen. Die hierfür notwendigen Klemmkräfte werden über einen Bedienhebel, der den Klemmechanismus durch eine rotatorische Bewegung öffnet bzw. schließt, aufgebracht. Nachteil dieser Konstruktion ist der relativ hohe Platzbedarf durch den für den Hebelmechanismus erforderlichen Bauraum. Die Anlenkung des Hebels erfolgt üblicherweise aufgrund des Platzbedarfes nicht innerhalb der Lenksäulenbaugruppe, so daß der im Innern vorhandene Bauraum ungenutzt bleibt.

Darüber hinaus haftet den üblichen Bedienhebelmechanismen der Nachteil an, daß der zur Aufbringung der notwendigen Klemmkräfte benötigte Schwenkwinkel relativ groß ist.

Aufgabe der vorliegenden Erfindung ist es daher, eine Klemmvorrichtung der gattungsgemäßen Art so weiterzuentwickeln, daß das benötigte Bauraumvolumen derartiger Klemmvorrichtungen wesentlich verkleinert wird. Darüber hinaus soll die Handhabung durch Verkürzung des Löse- bzw. Feststellweges der Betätigungseinrichtung verkleinert werden.

Diese Aufgabe wird erfindungsgemäß dadurch gelöst, daß die Betätigungseinrichtung der Klemmvorrichtung einen Umlenkmechanismus und eine Zugmitteleinrichtung aufweist.

Durch diese erfindungsgemäße Bauweise lassen sich die für die Aufbringung der Klemmkräfte notwendigen Bauteile nunmehr im Innern des Lenksäulengehäuses anordnen, einzig das zur Betätigung notwendige Zugmittel befindet sich außerhalb des Gehäuses und wird an einer für den Kraftfahrzeuglenker günstigen, leicht greifbaren Position angeordnet. Spezielle Ausgestaltungen des Gegenstandes der Erfindung ergeben sich aus den Merkmalen der Unteransprüche. Die Gestaltung des Umlenkmechanismus beispielsweise als Hebelmechanismus eröffnet die Möglichkeit, durch eine geringe Bewegung der Zugmitteleinrichtung besonders große Löse- und Klemmwege zu erreichen.

Als Zugmitteleinrichtung hat sich insbesondere ein Bowdenzug als vorteilhaft erwiesen, da dieser in seiner Einbaulage den gegebenen Platzverhältnissen optimal angepaßt werden kann. Alternativ hierzu ist jedoch auch ein festes Zuggestänge denkbar, sofern die vorhandenen Bauräume dies zulassen.

Es hat sich darüber hinaus als besonders vorteilhaft erwiesen, eine Spannfeder zu verwenden, um die Rückstellbewegung der Kontaktflächenpaarung in die Klemmstellung zu unterstützen.

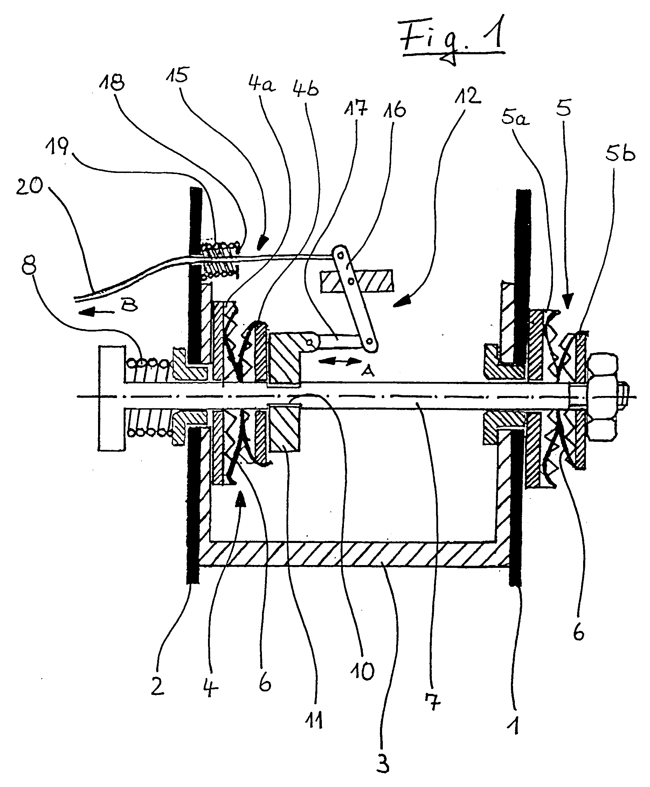

Darüber hinaus ist der Bowdenzug bzw. das Zuggestänge zweckmäßigerweise mit einer Längenverstelleinrichtung versehen, die zum einen eine Einstellung der Klemmkräfte und zum anderen einen Toleranzausgleich ermöglicht. Im folgenden wird ein Ausführungsbeispiel des Gegenstandes der Erfindung anhand der beigefügten Zeichnung näher erläutert.

Die Zeichnung stellt eine Schnittdarstellung durch eine erfindungsgemäße Klemmvorrichtung dar.

Die Klemmvorrichtung dient zur Festlegung eines schematisch dargestellten Lenksäulengehäuses 3 an einer karosserieseitig festgelegten Halterung, von der in der Zeichnung zwei Schenkel 1 und 2 dargestellt sind. Die hier dargestellte Ausführungsvariante der Klemmvorrichtung ist mit zwei Kontaktflächenpaarungen 4 bzw. 5 versehen, die jeweils aus zwei Rastsegmenten 4a, 4b bzw. 5a, 5b bestehen. Die Rastsegmente sind an den einander zugewandten Seitenflächen mit einer Verzahnung versehen. Innerhalb des Zwischenraumes der Verzahnungen sind Druckfedern 6 angeordnet, die mit ihren Federkräften ein Auseinandergehen der miteinander in Eingriff befindlichen Kontaktflächenpaarungen 4 und 5 unterstützen.

Beide Kontaktflächenpaarungen 4 und 5 werden durch einen gemeinsamen Schraubenbolzen 7 betätigt, wobei eine als Spiral- oder Tellerfeder ausgebildete Spannfeder 8 die notwendigen Klemmkräfte bereitstellt. Der Schraubenbolzen 7 besitzt in seinem zwischen den Schenkeln 1 und 2 der Karosseriehalterung angeordneten Teilbereich eine umlaufende Nut 10, in die ein Spannelement 11 eingreift. Eine axiale Bewegung in Richtung des Doppelpfeiles A des Spannelementes 11 bewirkt eine gleichgerichtete Bewegung des Schraubenbolzens 7 und daraus resultierend ein Auseinandergehen oder Ineinandergreifen der Kontaktflächenpaarungen 4 und 5.

Im inneren Bauraum des Lenksäulengehäuses 3 ist eine Betätigungsvorrichtung 12 angeordnet, die an einem Teilbereich des Lerksäulengehäuses festgelegt ist. Die Betätigungsvorrichtung 12 dient zur Axialbewegung des Spannelementes 11 und besteht erfindungsgemäß aus einem Umlenkmechanismus 14 und einer Zugmitteleinrichtung 15, die in diesem Ausführungsbeispiel als Bowdenzug ausgebildet ist. Der Umlenkmechanismus 14 besteht aus einem Hebel 16, der am Lenksäulengehäuse gelenkig gelagert ist. Ein freies Ende des Hebels 16 ist über eine Stange 17, die an beiden Enden Drehgelenke aufweist, mit dem Spannelement 11 verbunden. Das andere freie Ende des Hebels 16 ist gelenkig mit dem Bowdenzug 20 verbunden. Eine Bewegung des Bowdenzuges in Richtung des Pfeiles B in der Zeichnung führt dazu, daß sich der Schraubenbolzen 7 nach rechts bewegt, wobei zum einen die Spannfeder 8 zusammengepreßt wird, gleichzeitig erfolgt durch die Federwirkung der Druckfeder 6 ein Auseinandergehen der Kontaktflächenpaarungen 4 und 5, die Klemmwirkung der Klemmvorrichtung wird aufgehoben und das Lenksäulengehäuse kann gegenüber der karosserieseitigen Halterung in seiner Position verändert werden.

Die Länge der freien Enden des Hebels 16 hat unmittelbar Einfluß auf den Betätigungsweg des Bowdenzuges in Richtung des Pfeiles B bis zum vollständigen Lösen der Klemmvorrichtung, d.h. bis zum vollständigen Freigang der Rastsegmente 4a, 4b bzw. 5a, 5b. In diesem Ausführungsbeispiel ist der Bowdenzug 20 mit einem Vorspannelement 18 versehen, das bei einer Bewegung des Bowdenzuges in Richtung des Pfeiles B ein Zusammenpressen einer Feder 19 bewirkt, die zwischen dem Schenkel 2 der karosserieseitigen Halterung und dem Vorspannelement 18 angeordnet ist. Die Druckwirkung der Feder 19 unterstützt ein Zurückschnellen des Bowdenzuges in die Klemmlage der Klemmvorrichtung. Durch die Flexibilität des Bowdenzuges 20 ist es möglich, diesen problemlos den Einbaugegebenheiten am Kraftfahrzeug anzupassen. Er kann beispielsweise am Lenkrad in eine Lage geführt werden, die es dem Kraftfahrzeuglenker gestattet, den Bowdenzug zu betätigen, ohne die Hände vom Lenkrad zu entfernen.

Aus der beigefügten Zeichnung wird deutlich, daß die gesamte Betätigungsvorrichtung 12 bis auf den Bowdenzug 20 innerhalb des Bauraumes zwischen den Schenkeln 1 und 2 der karosserieseitigen Halterung angeordnet werden kann. Zusätzlich ist noch Platz vorhanden, im Bereich der Feder 19 oder des freien Endes des Hebels 16 am Bowdenzug eine Längenverstellvorrichtung herkömmlicher Art anzuordnen.

Natürlich ist es denkbar, den Bowdenzug durch ein Zuggestänge zu ersetzen, welches in analoger Weise eine Betätigungsbewegung in Richtung des Pfeiles B auf den Hebel 16 und von hier ausgehend über die Stange 17 auf das Vorspannelement 18 überträgt. Welche der Variante der Zugmitteleinrichtung zu wählen ist, entscheidet sich entsprechend den baulichen Randparametern der Kraftfahrzeuglenksäulenbaueinheit.

### Bezugszeichenliste:

- 1: - Schenkel
- 2: - Schenkel
- 3: - Lenksäulengehäuse
- 4: - Kontaktflächenpaarung
- 4a: - Rastsegment
- 4b: - Rastsegment
- 5a: - Rastsegment
- 5b: - Rastsegment
- 6: - Druckfeder
- 7: - Schraubbolzen
- 8: - Spannfeder
- 10: - Nut
- 11: - Spannelement
- 12: - Betätigungsvorrichtung
- 14: - Umlenkmechanismus
- 15: - Zugmitteleinrichtung
- 16: - Hebel
- 17: - Stange
- 18: - Vorspannelement
- 19: - Feder
- 20: - Bowdenzug

## Patentansprüche

1. Klemmvorrichtung für eine verstellbare Lenksäule eines Kraftfahrzeuges zur lösbaren Festlegung eines die Lenksäule aufnehmenden Gehäuses an einer mit der Karosserie des Kraftfahrzeuges fest verbundenen Halterung mit mindestens einer Kontaktflächenpaarung, die aus mindestens einer am Lenksäulengehäuse angeordneten Kontaktfläche und je einer korrespondierenden Kontaktfläche an der Karosseriehalterung besteht und mit einer Betätigungsvorrichtung zum Aufeinanderpressen der Kontaktpaarungen,
**dadurch gekennzeichnet, daß**
die Betätigungsvorrichtung (16) einen Umlenkmechanismus (14) und eine Zugmitteleinrichtung (15) aufweist.

2. Klemmvorrichtung nach Anspruch 1,
**dadurch gekennzeichnet, daß**
der Umlenkmechanismus (14) ein Hebelgestänge (16, 17) ist.

3. Klemmvorrichtung nach Anspruch 1 oder 2,
**dadurch gekennzeichnet, daß**
die Zugeinrichtung einen Bowdenzug (20) beinhaltet.

4. Klemmvorrichtung nach Anspruch 1 oder 2,
**dadurch gekennzeichnet, daß**
die Zugmitteleinrichtung (15) ein Zuggestänge aufweist.

5. Klemmvorrichtung nach Anspruch 2,
**dadurch gekennzeichnet, daß**
die Zugmitteleinrichtung (15) eine Feder (19) und eine Bowdenzug-Längenverstelleinrichtung aufweist.

6. Klemmvorrichtung nach Anspruch 3,
**dadurch gekennzeichnet, daß**
die Zugmitteleinrichtung eine Feder (19) und eine Zuggestänge-Längenverstelleinrichtung aufweist.
